# EUROPÄISCHE PATENTSCHRIFT

(11) **EP 2 964 964 B1**
(45) Veröffentlichungstag und Bekanntmachung des Hinweises auf die Patenterteilung: **11.11.2020**
(21) Anmeldenummer: 14716011.3
(22) Anmeldetag: 05.03.2014
(51) Int. Cl.: F15D 1/00

(54) **STROEMUNGSKOERPER MIT REIBUNGSARMER OBERFLAECHENSTRUKTUR**
FLOW BODY WITH LOW-FRICTION SURFACE STRUCTURE
CORPS D'ÉCOULEMENT PRÉSENTANT UNE STRUCTURE DE SURFACE À FAIBLE FROTTEMENT

(30) Priorität: 05.03.2013 DE 102013102181
(43) Veröffentlichungstag der Anmeldung: 13.01.2016
(73) Patentinhaber: Phitea GmbH, 12555 Berlin (DE)
(72) Erfinder: SCHUETZE, Werner, 10319 Berlin (DE); SLAZA, Alexander, 10178 Berlin (DE)
(74) Vertreter: Stütz, Jan
(86) Internationale Anmeldenummer: PCT/IB2014/059465
(87) Internationale Veröffentlichungsnummer: WO 2014/136066

(56) Entgegenhaltungen:
- DE-A1-102004 010 747
- JP-A- H0 510 696
- JP-A- 2001 050 215
- US-A1- 2011 315 248

## Beschreibung

Die Erfindung betrifft Strömungskörper mit einer zur Senkung des Widerstandes strukturierten Oberfläche. Als Strömungskörper sind im Sinne der Erfindung beispielsweise Tragflächen von Flugzeugen, Rotorblätter von Hubschraubern und Flugzeugen, Windkraftanlagen und Lüftungsrädern sowie Turbinenschaufeln und dergleichen zu verstehen. Dabei ist im Sinne der Erfindung auch ein Teil dieser Körper als Strömungskörper zu verstehen. Im weitesten Sinne der Erfindung sind als Strömungskörper alle Körper zu verstehen, welche wenigstens über eine Oberfläche verfügen, die von einem Medium überströmt wird.

Die Minderung des Widerstandes der Oberfläche eines Strömungskörpers durch Strukturveränderung der Oberfläche ist schon lange Stand Technik.

So wird beispielsweise die künstliche Haifischhaut eingesetzt, welche eine Riplet- Struktur mit mikroskopisch kleinen Rillen entlang der Strömungsrichtung aufweist. Bei der Umströmung wird die entstehende Wirbelbildung durch die Riplet-Struktur minimiert und damit eine reibungsärmere Umströmung ermöglicht. Zum Stand der Technik gehören hier auch Schwimmanzüge, die diesen Effekt nutzen. Ein anderes Beispiel ist der Golfball. In beiden Fällen sorgen die nicht glatten Oberflächen für eine reduzierte Reibung des Strömungskörpers. Aus dem Stand der Technik sind noch weitere Strukturen wie beispielsweise die Delphinhaut bekannt, welche zu einer Reduzierung des Strömungswiderstandes führen. In JP 2001 050215 A wird ein Strömungskörper mit einer Oberfläche offenbart, welche an wenigstens einer Stelle eine pyramidale Erhebung aufweist, die eine rautenförmige Grundfläche besitzt. JP H05 10696 A offenbart einen Strömungskörper mit einer Oberfläche, welche an wenigstens einer Stelle eine pyramidale Erhebung aufweist, die eine rautenförmige Grundfläche besitzt, wobei eine erste Diagonale der rautenförmigen Grundfläche gegenüber der zweiten Diagonalen ein Längenverhältnis von zwischen 5 und 8 besitzt.

Die aus dem Stand der Technik bekannten Lösungen besitzen den Nachteil, dass sie entweder den Reibungswiderstand nicht effizient genug verringern, anfällig für Verschmutzung sind, wodurch im Laufe der Zeit der Reibungswiderstand zunimmt oder sehr teuer in der Herstellung sind. Aufgabe der vorliegenden Erfindung besteht darin, einen Strömungskörper bereit zu stellen, welcher eine widerstandsmindernde Oberfläche aufweist und dabei eine im Vergleich zu den bekannten Strukturen alternative Strukturierung besitzt. Dabei soll der erfindungsgemäße Strömungskörper, kostengünstiger in der Herstellung sein, als andere Strömungskörper mit strukturierter, widerstandsmindernder Oberfläche bei einer vergleichbaren Reduzierung des Widerstandsbeiwertes. Aufgabe der Erfindung besteht zudem darin, ein Verfahren zur Strukturierung von Oberflächen von Strömungskörpern bereit zu stellen, durch welches der Widerstandsbeiwert von Strömungskörpern kosteneffizient und nachhaltig verbessert werden kann.

Diese Aufgabe wird mit einem Strömungskörper gemäß Anspruch 1 gelöst, welcher eine Oberfläche besitzt, die an wenigstens einer Stelle eine pyramidale Erhebung aufweist, wobei die pyramidale Erhebung über eine rautenförmige Grundfläche verfügt. Das bedeutet explizit, dass nicht der Strömungskörper selbst eine pyramidale Erhebung darstellt, sondern dass eine pyramidale Erhebung auf ihm angeordnet ist. Dabei sind erfindungsgemäß auf der Oberfläche der pyramidalen Erhebung (1) ebenfalls pyramidale Erhebungen angeordnet, deren Ausmaße jedoch gegenüber den Ausmaßen der ersten Erhebung, auf der sie aufsitzen, auf 1/10 bis 1/100 reduziert.

Eine erste Diagonale der rautenförmigen Grundfläche ist dabei so angeordnet, dass sie im Benutzungszustand des Strömungskörpers in Strömungsrichtung ausgerichtet ist. Da bei Strömungskörpern oftmals während unterschiedlicher Benutzungszustände unterschiedliche Strömungsrichtungen vorherrschen und sich die Ausrichtung der ersten Diagonalen der pyramidalen Erhebungen nicht während des Betriebs mitverändern kann, muss hier bei der Ausrichtung der pyramidalen Erhebung ein Kompromiss gewählt werden. "In Strömungsrichtung ausgerichtet" bedeutet dementsprechend, dass zumindest eine pyramidale Erhebung des Strömungskörpers während zumindest eines Betriebszustandes entlang ihrer längeren Diagonale in Strömungsrichtung ausgerichtet ist.

Das Längenverhältnis zwischen der ersten und der der zweiten Diagonalen der rautenförmigen Grundfläche der pyramidalen Erhebung liegt erfindungsgemäß zwischen 5 und 8. Die Höhe der Erhebung entspricht vorzugsweise etwa einem Viertel der Länge der in Strömungsrichtung ausgerichteten ersten Diagonalen.

Weitere bevorzugte Ausführungsformen der Erfindung sind in den abhängigen Ansprüchen angegeben.

Die Länge der Diagonalen der pyramidalen Erhebung liegt dabei vorzugsweise zwischen 6 nm und 60 mm. Gemäß einer Ausführungsform der Erfindung weist die Oberfläche des Strömungskörpers wenigstens zwei in Strömungsrichtung hintereinander liegende Erhebungen auf. Dabei verfügt die hintere, d.h. stromabwärts liegende Erhebung vorzugsweise über eine geringere Höhe, als die in Strömungsrichtung vorangehende Ergebung, besonders bevorzugt ist die Höhe der in Strömungsrichtung nachgelagerten Erhebung nur halb so groß, wie in Strömungsrichtung vorangehende. Vorzugsweise sind 3 oder mehr dieser Erhebungen mit jeweils gegenüber der vorangehenden Erhebung reduzierter Höhe vorgesehen. Gemäß einer weiteren Ausführungsform existiert nach dieser Reihe an Erhebungen mit jeweils reduzierter Höhe ein Strukturbruch und es folgt wieder eine Erhebung mit ursprünglicher Höhe sowie darauf folgende Erhebungen mit jeweils reduzierter Höhe.

Wie oben beschrieben, weist die Oberfläche der pyramidalen Erhebungen erfindungsgemäß ebenfalls kleine pyramidale Erhebungen auf. Es hat sich überraschenderweise gezeigt, dass der Einsatz der widerstandsmindernden Erhebungen gleichzeitig in wenigstens zwei unterschiedlichen Größenordnungen einen besonders starken Effekt auf die Widerstandsminderung des Strömungskörpers hat. Vorzugsweise sind die aufeinander aufsitzenden Strukturen geometrisch ähnlich aufgebaut. Erfindungsgemäß weist die Diagonallänge der pyramidalen Erhebung, welche auf einer größeren pyramidalen Erhebung aufsitzt, zwischen einem Zehntel und einem Hundertstel der Diagonallänge der größeren pyramidalen Erhebung auf.

Gemäß einer weiteren Ausführungsform weist die Oberfläche des erfindungsgemäßen Strömungskörpers wenigsten zwei im Wesentlichen orthogonal zur Strömungsrichtung gegeneinander versetzt angeordnete pyramidale Erhebungen auf.

Vorzugsweise weist der Strömungskörper orthogonal zur Strömungsrichtung eine Vielzahl von Erhebungen auf, die besonders bevorzugt entlang der Anströmkante angeordnet sind. Vorzugsweise sind jedoch auch in Strömungsrichtung eine Vielzahl von Erhebungen auf der Oberfläche des erfindungsgemäßen Strömungskörpers angeordnet.

Nach einer Ausführungsform sind in den Bereichen des Strömungskörpers, in denen eine höhere Strömungsgeschwindigkeit vorliegt, die Längen der Diagonalen der rautenförmigen Grundfläche der pyramidalen Erhebung kürzer, als in den Bereichen mit niedrigerer Strömungsgeschwindigkeit. Das Verhältnis der beiden Diagonallängen zueinander ist jedoch vorzugsweise konstant. Ebenso ist vorzugsweise die Höhe der pyramidalen Erhebung in Bereichen mitniedrigerer Strömungsgeschwindigkeit höher, als in Bereichen mit hoher Strömungsgeschwindigkeit.

Nach einem besonders wirkungsvollen Ausführungsbeispiel ist eine Vielzahl von Erhebungen entlang der Anströmkante des Strömungskörpers angeordnet, wobei in Bereichen kleinerer Strömungsgeschwindigkeit die Diagonallängen der rautenförmigen Grundfläche größer sind. Gleichzeitig sind in Strömungsrichtung wenigstens drei Reihen an Erhebungen ausgebildet, wobei die Diagonallängen der rautenförmigen Grundfläche bevorzugt der Länge der Diagonalen der in Strömungsrichtung vorangehenden Erhebung aus der in Strömungsrichtung vorangehenden Reihe entspricht. Nur nimmt die Höhe der pyramidalen Erhebungen von Reihe zu Reihe insgesamt ab, wobei die Höhe der Erhebungen, welche zu einer Reihe gehören unterschiedlich sein kann.

Bei allen Ausführungsformen kann die Strukturierung des Strömungskörpers direkt aus dem Grundmaterial des Strömungskörpers oder aber auf einer Beschichtung bestehen, welche auf dem Strömungskörper aufgebracht ist.

Neben dem Strömungskörper betrifft ein nicht zur Erfindung gehörender Aspekt ein Verfahren zur Herstellung eines Strömungskörpers mit widerstandsmindernder Oberfläche. Dabei wird mittels eines Laserstrahls die Oberfläche des Strömungskörpers so strukturiert, dass die Oberfläche wenigstens eine pyramidale Erhebung bzw. die ansonsten beschriebenen Strukturen aufweist. Gemäß einer Ausführungsform wird direkt das Grundmaterial eines vorhandenen Strömungskörpers strukturiert. Gemäß einem weiteren Beispiel wird eine Folie oder dergleichen aufgebracht, welche eine beschichtete Oberfläche aufweist und als noch weiteres Beispiel wird auf das bestehende Grundmaterial des Strömungskörpers zunächst ein Beschichtung aufgebracht und diese wird dann vorzugsweise mittels eines Lasers strukturiert.

Gemäß einem noch anderen Beispiel wird die Strukturierung in Form einer Beschichtung oder anders aufgebauter Erhebungen auf das Grundmaterial des Strömungskörpers aufgebracht. Wenn die Erhebung auf einer Beschichtung aufgebracht ist oder durch diese gebildet ist, handelt es sich vorzugsweise um eine Schicht, welche wenigstens bis zu einer Beschleunigung von 40 g fest haftend bleibt, abriebsfest, temperaturfest und korrosionsbeständig ist.

Gemäß einem weiteren Beispiel ist die Oberfläche des Strömungskörpers aus mehreren Schichten aufgebaut. Bevorzugt ist die Oberfläche des Strömungskörpers aus zwei oder drei Schichten aufgebaut. Wenn er aus zwei Schichten aufgebaut ist, ist die erste Schicht durch das Grundmaterial des Strömungskörpers gebildet, indem mittels Laserimpulsen im Bereich von 7 bis 15 nm, bevorzugt 10 nm das Grundmaterial aufgeschmolzen und geglättet ist. Darauf ist dann die verschleißarme Schicht aufgebracht.

Bei dem Beispiel, bei der die Oberfläche des Strömungskörpers aus drei Schichten gebildet ist, ist die erste Schicht des wiederum durch das Grundmaterial des Strömungskörpers gebildet, indem mittels Laserimpulsen im Bereich von 7 bis 15 nm, bevorzugt 10 nm das Grundmaterial aufgeschmolzen und geglättet ist. Die zweite Schicht ist aus der geglätteten Oberfläche der ersten Schicht gebildet indem diese zusätzlich in einem Bereich von 3 bis 5 nm mittels Laserimpulsen mikrogehärtet ist. Auf der gehärteten Schicht ist eine fest haftende verschleißarme dritte Schicht aufgebracht, die eine Schichtdicke von 1 bis 2 nm, bevorzugt 1 ,5 nm aufweist.

Vorzugsweise ist die dritte, strukturierte Schicht aus Diamant, Titan, Tantal oder Wolframcarbid oder ähnlichen Hartstoffen, wie Titannitrid oder Siliziumcarbid, Glasstahl (bevorzugt aus dem Grundmaterial erzeugt) aufgebaut. Die dritte Schicht kann auch erzeugt sein, indem in einem Grenzbereich der darunter liegenden vorzugsweise mikrogehärteten Schicht Titan-, Tantal-, Wolframcarbid Partikel oder Titannitrid eingebracht ist.

Diese Oberflächen-Schicht ist mittels Laserimpulsen strukturiert, vorzugsweise mit einer Periode von zwischen 500 und 700 nm und besonders bevorzugt von in etwa 600 nm und einer Tiefe von vorzugsweise 200 bis 500 nm. Es hat sich überraschender Weise gezeigt, dass diese Strukturierung die Reibung erheblich mindert. Dieser Effekt wird noch verstärkt, wenn die Mikrostrukturierung geometrische ähnlich, zu makroskopischen auf der Oberfläche des Strömungskörpers aufgebrachten Erhebungen sind.

Weitere Einzelheiten der Erfindung gehen aus den Zeichnungen anhand der Beschreibung hervor.

Dabei sollen die in den beschriebenen Ausführungsbeispielen offenbarten Merkmalskombinationen nicht limitierend auf die Erfindung wirken, vielmehr sind auch die Merkmale der unterschiedlichen Ausführungen miteinander kombinierbar. In den Zeichnungen zeigen:
Figur 1 eine schematische Draufsicht auf eine pyramidale Erhebung,
Figur 2 eine Seitenansicht einer pyramidalen Erhebung,
Figur 3 eine Schnittdarstellung in Strömungsrichtung einer Ausführungsform,
Figur 4 eine Draufsicht auf eine Erhebung mit selbstähnlichen weiteren
   Erhebungen,
Figur 5. eine Draufsicht auf eine weitere Ausführung des Strömungskörpers mit pyramidalen Erhebungen unterschiedlicher Größe.

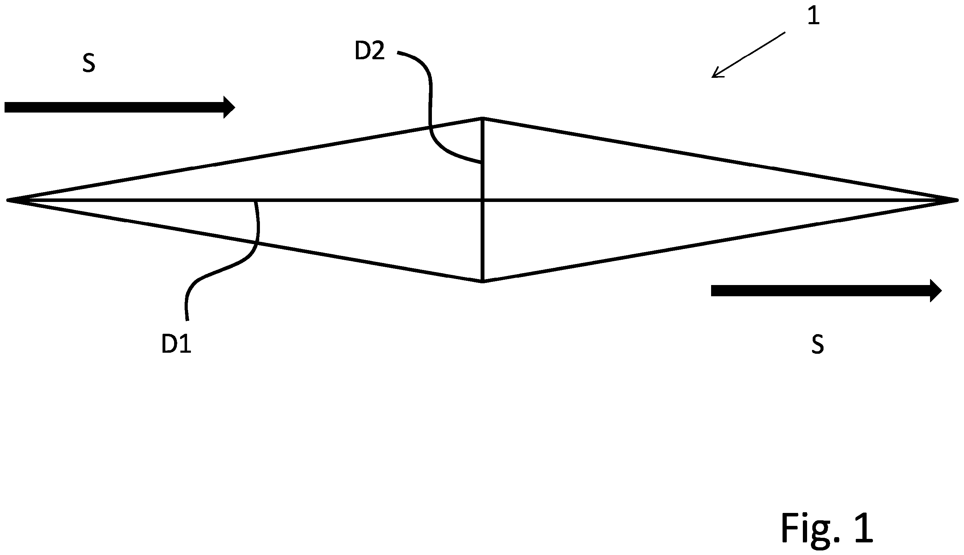

In Figur 1 ist schematisch die Draufsicht auf eine pyramidale Erhebung 1 auf der Oberfläche des erfindungsgemäßen Strömungskörpers dargestellt. Der Pfeil S stellt dabei die Strömungsrichtung des Strömungsmediums dar, welche auf der Oberfläche des Strömungskörpers vorherrscht. Daraus wird ersichtlich, dass die Erhebung derart auf der Oberfläche des Strömungskörpers angeordnet ist, dass die Diagonale D1 der rautenförmigen Grundfläche der pyramidalen Erhebung, welche die größere Länge im Vergleich zu der zweiten Diagonale D2 der Grundfläche besitzt, in Strömungsrichtung S ausgerichtet ist. Die zweite Diagonale D2 ist damit orthogonal zur Strömungsrichtung S ausgerichtet. Der spitze Winkel, der rautenförmigen Grundfläche der pyramidalen Erhebung 1 liegt vorzugsweise zwischen 15° und 30° und wie hier dargestellt in etwa 20°.

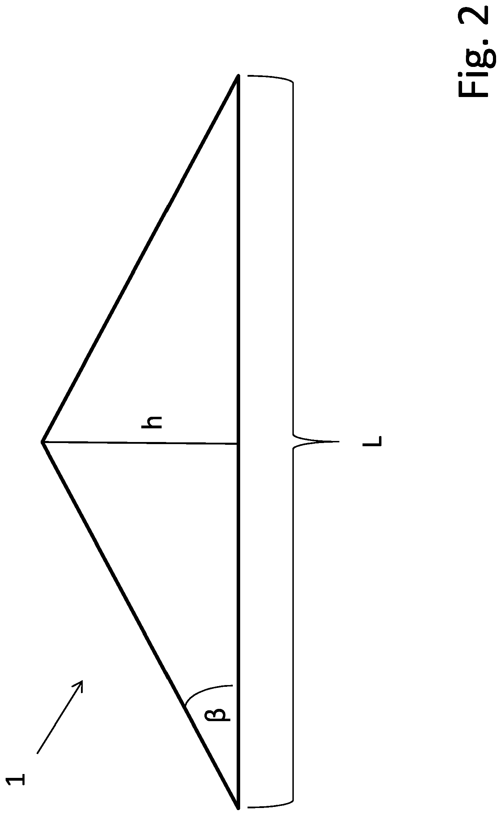

Figur 2 zeigt eine Seitenansicht der pyramidalen Erhebung 1 des oberflächenstrukturierten Strömungskörpers. Wie hier dargestellt, besitzt die pyramidale Erhebung 1 eine Höhe h, welche in etwa einem Viertel der Länge der längs zur Strömungsrichtung S ausgerichteten Diagonalen D1 entspricht. Die hier dargestellte pyramidale Erhebung 1 kann eine Länge L der in Strömungsrichtung ausgerichteten Diagonalen D1 von zwischen 3 nm und 30 mm, vorzugsweise jedoch 300 nm besitzen.

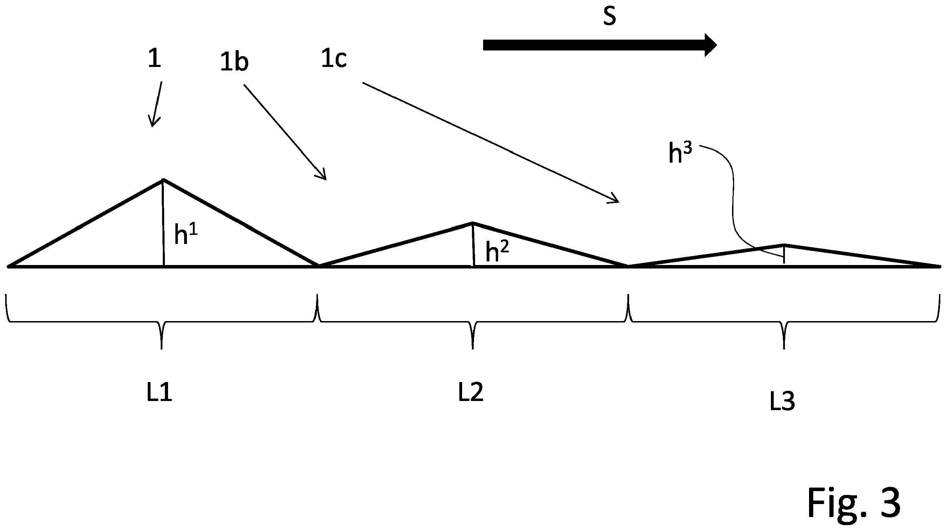

Figur 3 zeigt eine Schnittdarstellung des Strömungskörpers in Strömungsrichtung S. Gemäß der hier dargestellten Ausführungsform sind in Strömungsrichtung S hintereinander liegend mehrere pyramidale Erhebungen 1 , 1 b, 1 c vorgesehen, welche wie hier dargestellt über die gleiche Diagonallängen D1 , D2 und die gleiche Länge L1 , L2 und L3 verfügen, deren Höhe h sich jedoch in Strömungsrichtung S mit jeder nachfolgenden pyramidalen Erhebung auf die Hälfte verkürzt ist.

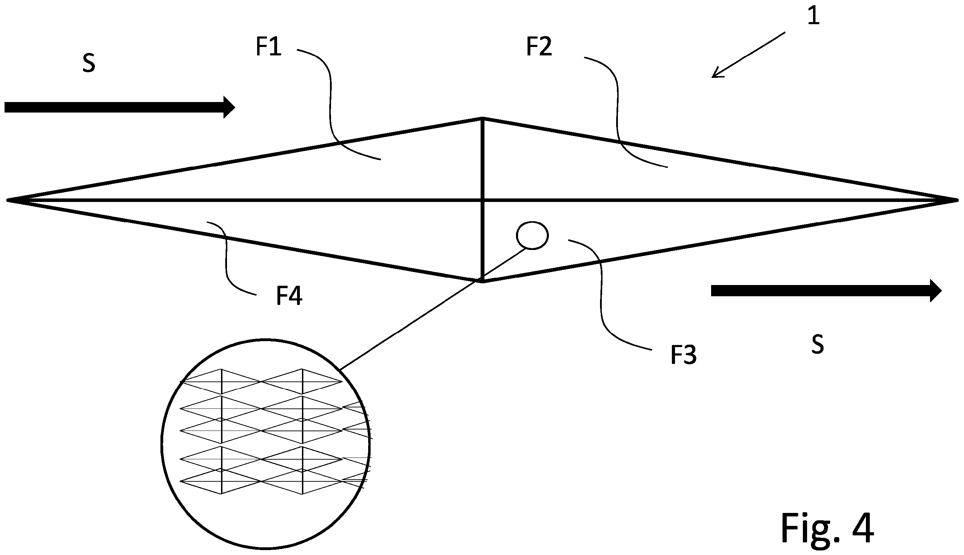

Figur 4 zeigt eine erfindungsgemäße pyramidale Erhebung 1, welche auf ihren vier Seitenflächen F1 , F2, F3 und F4 pyramidale Erhebungen 1 aufweist, die gegenüber der pyramidalen Erhebung 1, auf der sie aufsitzen um 1 /100 bis 1 /10 reduziert sind. Dabei sind die kleineren Erhebungen, welche hier in einem Ausschnitt vergrößert dargestellt sind, geometrisch selbstähnlich zu der pyramidalen Erhebung 1, auf der sie aufsitzen.

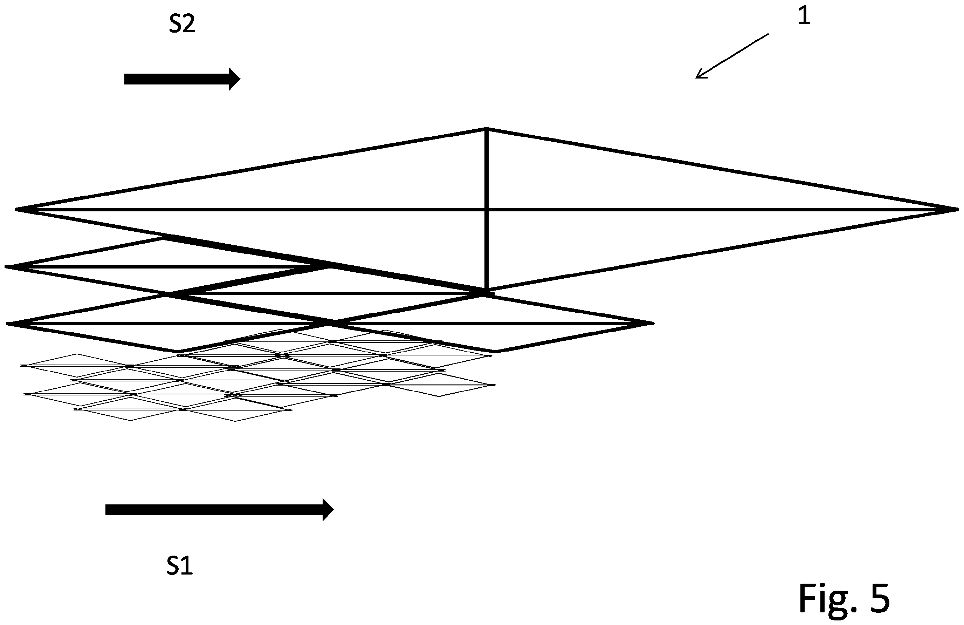

Figur 5 zeigt, in einer schematischen Draufsicht eine weitere Ausführungsform der Erfindung. Hierbei sind orthogonal zur Strömungsrichtung S Erhebungen 1 mit unterschiedlichen Ausmaßen vorgesehen, welche jedoch bezogen auf ihre rautenförmigen Grundflächen geometrisch ähnlich sind. Dabei sind in den Bereichen S1, in denen im Betriebszustand auf dem Strömungskörper eine höhere Strömungsgeschwindigkeit vorherrscht, die Ausmaße kleiner, als in Bereichen S2 mit einer geringeren Strömungsgeschwindigkeit über der Oberfläche des Körpers.

### Bezugszeichenliste: 1 Erhebung

D1 Diagonale in Strömungsrichtung
D2 Diagonale orthogonal zur Strömungsrichtung
S Strömungsrichtung
H Höhe der pyramidalen Erhebung
L Länge der pyramidalen Erhebung
F1 - F4 Seitenflächen der pyramidalen Erhebung
1 b, 1 c in Strömungsrichtung hintereinander liegende Erhebungen.

## Patentansprüche

1. Strömungskörper mit einer Oberfläche, welche an wenigstens einer Stelle eine pyramidale Erhebung (1) aufweist, die eine rautenförmige Grundfläche besitzt, wobei eine erste Diagonale (D1) der rautenförmigen Grundfläche im Benutzungszustand in Strömungsrichtung (S) ausgerichtet ist und gegenüber der zweiten Diagonalen (D2) ein Längenverhältnis von zwischen 5 und 8 besitzt, **dadurch gekennzeichnet, dass** die Oberfläche der pyramidalen Erhebung (1) ebenfalls pyramidale Erhebungen aufweist, deren Ausmaße jedoch gegenüber den Ausmaßen der ersten Erhebung, auf der sie aufsitzen, auf 1/10 bis 1/100 reduziert sind.

2. Strömungskörper nach Anspruch 1, **dadurch gekennzeichnet, dass** die Höhe (H) der Erhebung in etwa einem Viertel, der in Strömungsrichtung (S) ausgerichteten Diagonallänge (D1) entspricht.

3. Strömungskörper nach einem der Ansprüche 1 oder 2, welcher auf seiner Oberfläche wenigstens zwei in Strömungsrichtung (S) direkt hintereinander angeordnete pyramidale Erhebungen (1) aufweist, wobei die Höhe (H) der in Strömungsrichtung (S) weiter hinten angeordneten Erhebung (1) nur halb so groß ist, wie die in Strömungsrichtung (S) vorangehende Erhebung (1).

4. Strömungskörper nach einem der vorangehenden Ansprüche, **dadurch gekennzeichnet, dass** die pyramidale Erhebung (1) bzw. die pyramidalen Erhebungen durch Strukturierung des Grundmaterials des Strömungskörpers geschaffen sind.

5. Strömungskörper nach einem der Ansprüche 1 bis 3, **dadurch gekennzeichnet, dass** die pyramidale Erhebung (1) bzw. die pyramidalen Erhebungen auf einer Beschichtung gebildet sind, welche auf das Grundmaterial des Strömungskörpers aufgebracht ist.

6. Strömungskörper nach einem der vorangehenden Ansprüche, **dadurch gekennzeichnet, dass** die Oberfläche wenigstens 2 im Wesentlichen orthogonal gegenüber der Strömungsrichtung zueinander versetzt angeordnete pyramidale Erhebungen (1) aufweist.

7. Strömungskörper nach Anspruch 6, **dadurch gekennzeichnet, dass** die Erhebungen (1) entlang der Anströmkante angeordnet sind.

8. Strömungskörper nach einem der Ansprüche 6 oder 7, **dadurch gekennzeichnet, dass** die im Wesentlichen orthogonal gegenüber der Strömungsrichtung (S) zueinander versetzt angeordneten Erhebungen (1) zwar jeweils die gleichen Längenverhältnisse ihrer Diagonalen (D1), (D2) besitzen, jedoch eine unterschiedliche Gesamtlänge besitzen.

9. Strömungskörper nach einem der Ansprüche 3 bis 8, **dadurch gekennzeichnet, dass** die Diagonallängen (D1), (D2) einer Erhebung (1) auf der Oberfläche, welche in einem Bereich höherer Strömungsgeschwindigkeit (S1) angeordnet ist, kleiner ist, als eine in einem Bereich mit kleinerer Strömungsgeschwindigkeit (S2) angeordnete zweite Erhebung.

## Claims

1. Flow type body with a surface having a pyramidal projection (1) at at least one position, the projection having a diamond-shaped base, where a first diagonal (D1) of the rhombic base area in case of use is oriented in the direction of flow (S) and having an aspect ratio of between 5 and 8 with respect to the second diagonal (D2), **characterized in that** the surface of the pyramidal projection (1) also has pyramidal projections, the dimensions of which, however, are reduced to 1/10 to 1/100 of the dimensions of the first projection on which they are seated.

2. Flow type body according to claim 1, **characterized in that** the height (H) of the projection corresponds to approximately one quarter of the diagonal length (D1) oriented in the direction of flow (S).

3. Flow type body according to one of the claims 1 or 2, comprising - on its surface - at least two in flow direction (S) directly behind each other arranged pyramidal projections (1), whereby the height (H) of the projection (1) which is located in direction of flow (S) downstream is only half as large as the projection (1) upstream in the direction of flow (S).

4. Flow type body according to one of the preceding claims, **characterized in that** the pyramidal projection (1) or the pyramidal projections are created by structuring the basic material of the flow type body.

5. Flow type body according to one of claims 1 to 3, **characterized in that** that the pyramidal projection (1) or the pyramidal projections are located on a coating which is applied to the base material of the flow type body.

6. Flow type body according to one of the preceding claims, **characterized in that** the surface comprises at least 2 pyramidal projections (1), offset to each other in a direction substantially orthogonal to the flow direction.

7. Flow type body according to claim 6, **characterized in that** the projections (1) are arranged along the leading edge.

8. Flow type body according to one of claims 6 or 7, **characterized in that** the projections (1) which are arranged offset substantially orthogonally with respect to the flow direction (S) have the same length ratios of their diagonals (D1), (D2), but have a different overall length.

9. Flow type body according to one of claims 3 to 8, **characterized in that** that the diagonal lengths (D1), (D2) of a projection (1) which is located on the surface which is arranged in a region of higher flow velocity (S1) is smaller than a second projection arranged in a region of lower flow velocity (S2).

## Revendications

1. Corps d'écoulement avec une surface qui présente, à au moins un endroit, un rehaussement pyramidal (1) qui possède une surface en forme de losange, cependant qu'une première diagonale (D1) de la surface en forme de losange est orientée, en état d'utilisation, dans le sens de l'écoulement (S) et possède un rapport de longueur entre 5 et 8 par rapport à la seconde diagonale (D2), **caractérisé en ce que** la surface du rehaussement pyramidal (1) présente également des rehaussements pyramidaux dont les dimensions sont cependant réduites à 1/10 jusqu'à 1/100 par rapport aux dimensions du premier rehaussement sur lequel ils se trouvent.

2. Corps d'écoulement selon la revendication 1, **caractérisé en ce que** la hauteur (H) du rehaussement correspond environ à un quart de la longueur de diagonale (D1) orientée dans le sens de l'écoulement (S).

3. Corps d'écoulement selon l'une des revendications 1 ou 2 qui présente sur sa surface au moins deux rehaussements pyramidaux (1) placés directement l'un derrière l'autre dans le sens de l'écoulement (S), cependant que la hauteur (H) du rehaussement (1) placé plus en arrière dans le sens de l'écoulement (S) n'est que de la moitié du rehaussement (1) qui le précède dans le sens de l'écoulement (S).

4. Corps d'écoulement selon l'une des revendications précédentes, **caractérisé en ce que** le rehaussement pyramidal (1) ou les rehaussements pyramidaux sont créés par structuration du matériau de base du corps d'écoulement.

5. Corps d'écoulement selon l'une des revendications 1 à 3, **caractérisé en ce que** le rehaussement pyramidal (1) ou les rehaussements pyramidaux sont formés sur un revêtement qui est appliqué sur le matériau de base du corps d'écoulement.

6. Corps d'écoulement selon l'une des revendications précédentes, **caractérisé en ce que** la surface présente au moins deux rehaussements pyramidaux (1) placés décalés l'un par rapport à l'autre dans le sens substantiellement à angles droits par rapport au sens de l'écoulement.

7. Corps d'écoulement selon la revendication 6, **caractérisé en ce que** les rehaussements (1) sont placés le long de du bord d'attaque.

8. Corps d'écoulement selon l'une des revendications 6 ou 7, **caractérisé en ce que** les rehaussements (1) placés décalés l'un par rapport à l'autre dans le sens substantiellement à angles droits par rapport au sens de l'écoulement (S) possèdent chacun les mêmes rapports de longueur de leurs diagonales (D1), (D2) mais possèdent une longueur totale différente.

9. Corps d'écoulement selon l'une des revendications 3 à 8, **caractérisé en ce que** les longueurs des diagonales (D1), (D2) d'un rehaussement (1) sur la surface qui est placée dans une zone de plus grande vitesse d'écoulement (S1) sont plus petites qu'un second rehaussement placé dans une zone de plus petite vitesse d'écoulement (S2).
